# EUROPÄISCHE PATENTSCHRIFT

(11) **EP 3 267 171 B1**
(45) Veröffentlichungstag und Bekanntmachung des Hinweises auf die Patenterteilung: **06.05.2020**
(21) Anmeldenummer: 16178283.4
(22) Anmeldetag: 07.07.2016
(51) Int. Cl.: G01L 19/06, G01L 23/22

(54) **SYSTEM MIT EINER BRENNKAMMER EINES VERBRENNUNGSMOTORS, EINEM PIEZOELEKTRISCHEN SENSOR UND EINER SCHUTZVORRICHTUNG DES PIEZOELEKTRISCHEN SENSORS**
SYSTEM WITH A COMBUSTION CHAMBER OF A COMBUSTION ENGINE, A PIEZOELECTRIC SENSOR AND A PROTECTION DEVICE OF THE PIEZOELECTRIC SENSOR
SYSTEME COMPRENANT UNE CHAMBRE DE COMBUSTION D'UN MOTEUR A COMBUSTION INTERNE, UN CAPTEUR PIEZOELECTRIQUE ET UN DISPOSITIF DE PROTECTION DE CAPTEUR PIEZOELECTRIQUE

(43) Veröffentlichungstag der Anmeldung: 10.01.2018
(73) Patentinhaber: Kistler Holding AG, 8408 Winterthur (CH)
(72) Erfinder: Brunner, Simon, 8307 Effretikon (CH); Markus, Haefner, 8050 Zürich (CH)

(56) Entgegenhaltungen:
- DE-A1- 4 419 138
- DE-A1-102014 116 760
- GB-A- 2 217 846
- US-A1- 2004 237 629
- US-A1- 2005 229 709

## Beschreibung

### Technisches Gebiet

Die Erfindung betrifft ein System mit einer Brennkammer eines Verbrennungsmotors, einen piezoelektrischen Sensor und eine Schutzvorrichtung des piezoelektrischen Sensors nach dem Oberbegriff des unabhängigen Anspruches.

### Stand der Technik

Sensoren sind bekannt und werden vielfältig verwendet. So wird mit einem piezoelektrischen Sensor bei einer Druckindizierung von Verbrennungsmotoren in einer Brennkammer ein herrschender Zylinderdruck in Abhängigkeit einer Kurbelwellenstellung oder einer Zeit erfasst. Verbrennungsmotoren umfassen Viertaktmotoren und Zweitaktmotoren wie Ottomotoren, Dieselmotoren, Wankelmotoren, usw. Bei Schiffsdieselmotoren wird mit ihnen eine Langzeitüberwachung des Zylinderdruckes durchgeführt. In der Brennkammer wird ein flüssiges oder gasförmiges Medium verbrannt, ein zeitlicher Verlauf des Zylinderdruckes wird Druckverlauf genannt. Mit dem piezoelektrischen Sensor lässt sich ein Druckverlauf erfassen, der normalerweise im Bereich von 0.9 bis 250bar liegt, der aber bei Vorentflammung und klopfender Verbrennung Druckspitzen von 500bar und höher aufweist. Der piezoelektrische Sensor erfasst den Druckverlauf dynamisch mit Messfrequenzen, welche eine zeitlichen Auflösung von rund 100kHz haben. Der piezoelektrische Sensor lässt sich auch bei der Drucküberwachung in Strahltriebwerken, Gasturbinen, Dampfturbinen, Dampfmaschinen, usw. verwenden.

Der piezoelektrische Sensor ist in einer Wandung der Brennkammer mechanisch befestigt und steht in der Brennkammer im Kontakt mit dem Medium. Um ein Eindringen des Mediums in den piezoelektrischen Sensor zu verhindern, was eine Funktionsfähigkeit des piezoelektrischen Sensors beeinträchtigen kann, weist der piezoelektrische Sensor eine Membran und ein Gehäuse auf. Die Membran ist in einem Randbereich stoffschlüssig mit dem Gehäuse verbunden. Ein piezoelektrischer Aufnehmer ist im Gehäuse in einem Mittenbereich an der Membran angeordnet. Beim Druckverlauf wirkt das Medium mit einer Normalkraft auf die Membran und über die Membran auf den piezoelektrischen Aufnehmer. Für einen möglichst grossen Krafthauptschluss vom Medium auf den piezoelektrischen Aufnehmer ist die Membran bereichsweise dünn ausgebildet, mit einer minimalen Membrandicke von rund 90µm. Die Normalkraft erzeugt auf dem piezoelektrischen Aufnehmer elektrische Polarisationsladungen, welche proportional zur Grösse des Druckverlaufes sind.

Der piezoelektrische Sensor steht also über die Membran im Kontakt mit dem Medium der Brennkammer. Die Membran ist nicht nur einem Druckverlauf mit hohen Druckspitzen ausgesetzt, sondern auch einem Wärmestrom mit Temperaturspitzen von 850K und höher. Über den Kontakt mit dem Medium wird die Membran mechanisch gedehnt und viel Wärme wird in die Membran eingetragen. Um die Membran vor mechanischer Beschädigung zu schützen, zeigt die Schrift WO2007140641A1 eine Schutzvorrichtung eines piezoelektrischen Sensors. Die Schutzvorrichtung ist scheibenförmig und deckt die Membran weitgehend vom Brennraum ab. Die Schutzvorrichtung ist über ein Clipsystem am Gehäuse angebracht. Die Schutzvorrichtung weist eine Vielzahl kleiner Öffnungen auf, durch die Medium zur Membran hindurchtreten kann. Auf diese Weise treffen bei Vorentflammung und klopfender Verbrennung entstehende Flammenfronten auf der Schutzvorrichtung auf und werden in der Vielzahl kleiner Öffnungen zum Erlöschen gebracht, bevor sie zur Membran gelangen können. Auch schlägt der Wärmestrom auf der Schutzvorrichtung auf und nur ein Teil eines Wärmeeintrages des Wärmestroms gelangt von dort zur Membran. Allerdings können die kleinen Öffnungen der Schutzvorrichtung mit Verbrennungsrückständen verkoken, was die Funktionsfähigkeit des piezoelektrischen Sensors beeinträchtigen kann.

Die Schrift GB2217846A1 offenbart einen piezoresistiven Drucksensor zum Einsatz in einer Brennkammer eines Verbrennungsmotors mit einer Schutzvorrichtung zum Schutz einer Membran des Drucksensors vor übermässiger Hitze. In der Schutzvorrichtung sind Öffnungen angebracht, damit die Membran Druckänderungen in der Brennkammer erfassen kann.

Die Schrift DE4419138A1 bezieht sich auf einen piezoelektrischen Drucksensor.

Und die Schrift US2004/237629A1 zeigt einen optischen Drucksensor zum Einsatz in einer Brennkammer eines Verbrennungsmotors mit einem Hitzeschild zum Schutz einer Membran des Drucksensors vor Temperaturspitzen. Im Hitzeschild sind vielfältig geformte Öffnungen angebracht, um sicher zu stellen, dass der Druck zwischen Membran und Hitzeschild dem Druck in der Brennkammer entspricht.

Nun besteht ein Bedürfnis nach einer Schutzvorrichtung, nicht nur die Membran, sondern auch den piezoelektrischen Aufnehmer vor schädlichen Druckspitzen schützt. Denn Druckspitzen treten als Stosswellen auf, bei denen sich Teile des Mediums schneller als eine Schallgeschwindigkeit des Mediums bewegen. Stosswellen weisen einen sprunghaften Druckanstieg und einen sprunghaften Druckabfall auf. Der Druckanstieg und der Druckabfall erfolgen in einem Zeitraum von wenigen nsec. Stosswellen koppeln aus der Brennkammer in den Sensor ein. Und da der piezoelektrische Aufnehmer und die Membran bereichsweise im flächigen mechanischen Kontakt sind, wirken die Stosswellen über diesen flächigen mechanischen Kontakt auf den piezoelektrischen Aufnehmer. Der piezoelektrische Aufnehmer wiederum weist piezoelektrisches Material auf, welches verglichen mit dem Material der Membran eine relativ geringe Bruchfestigkeit aufweist. Unter Bruchfestigkeit wird eine maximal ertragbare mechanische Spannung eines Materials verstanden. Das piezoelektrische Material ist defektempfindlich und weist herstellungsbedingt Inhomogenitäten im Gefüge wie Mikrorisse auf und kann bei Stosswellen reissen und zerbrechen und so die Funktionsfähigkeit des piezoelektrischen Sensors beeinträchtigen.

Aufgabe der vorliegenden Erfindung ist es, die bekannte Schutzvorrichtung eines piezoelektrischen Sensors zur Verwendung in einer Brennkammer eines Verbrennungsmotors zu verbessern.

### Darstellung der Erfindung

Diese Aufgabe wird durch die kennzeichnenden Merkmale des unabhängigen Anspruchs gelöst.

Die Erfindung betrifft ein System mit einer Brennkammer eines Verbrennungsmotors, einem piezoelektrischen Sensor zum Erfassen eines Druckverlaufes in der Brennkammer und einer Schutzvorrichtung des piezoelektrischen Sensors; wobei der piezoelektrische Sensor eine Membran und einen piezoelektrischen Aufnehmer aufweist, wobei der piezoelektrische Sensor in einer Wandung der Brennkammer mechanisch befestigt ist; wobei die Schutzvorrichtung eine vom piezoelektrischen Aufnehmer abgewandte Seite der Membran weitgehend abdeckt; wobei die Schutzvorrichtung Durchgänge aufweist, durch welche flüssiges oder gasförmiges Medium aus der Brennkammer zur Membran gelangt; und wobei die Durchgänge in einem grösstmöglichen Abstand zum piezoelektrischen Aufnehmer angeordnet sind.

Erfindungsgemäss wird das piezoelektrische Material des piezoelektrischen Aufnehmers vor Stosswellen aus der Brennkammer geschützt, in dem die Durchgänge in der Schutzvorrichtung, durch welche Stosswellen aus der Brennkammer zur Membran gelangen, in einem grösstmöglichen Abstand zum piezoelektrischen Aufnehmer angeordnet sind. So sind die Durchgänge direkt auf einen radialen Membranbereich der Membran gerichtet, der radial von einem Mittenbereich der Membran beabstandet ist. Der piezoelektrische Aufnehmer hingegen ist nahe am Mittenbereich der Membran angeordnet. Die Stosswellen müssen somit in einem Labyrinth zwischen der Schutzvorrichtung und der Membran einen grossen Weg zurücklegen, bevor sie vom radialen Membranbereich zum Mittenbereich der Membran gelangen. Auf dem grossen Weg durch das Labyrinth treten die Stosswellen mehrmals in Wechselwirkung mit der Schutzvorrichtung und der Membran. Bei den mehrmaligen Wechselwirkungen geben die Stosswellen kinetische Energie ab, so dass wenn die Stosswellen zum Mittenbereich der Membran gelangt sind, sie nur noch eine kinetische Restenergie besitzen, welche dann vom Mittenbereich der Membran auf den piezoelektrischen Aufnehmer wirkt. Die kinetische Restenergie der Stosswellen ist unschädlich für das defektempfindliche piezoelektrische Material des piezoelektrischen Aufnehmers.

### Kurze Beschreibung der Zeichnungen

Im Folgenden wird die Erfindung beispielhaft unter Beizug der Figuren näher erklärt. Es zeigen
- Fig. 1: einen Querschnitt in Längsrichtung durch einen Teil eines Systems mit einer Wandung einer Brennkammer, einem piezoelektrischen Sensor und einer ersten Ausführungsform einer Schutzvorrichtung des piezoelektrischen Sensors;
- Fig. 2: einen Querschnitt in Radialrichtung durch die Ausführungsform der Schutzvorrichtung nach Fig. 1;
- Fig. 3: einen Querschnitt in Längsrichtung durch die Ausführungsform der Schutzvorrichtung nach Fig. 1;
- Fig. 4: einen Querschnitt in Längsrichtung durch eine zweite Ausführungsform einer Schutzvorrichtung für ein System nach Fig. 1;
- Fig. 5: einen Querschnitt in Längsrichtung durch eine dritte Ausführungsform einer Schutzvorrichtung für ein System nach Fig. 1;
- Fig. 6: einen Querschnitt in Längsrichtung durch eine vierte Ausführungsform einer Schutzvorrichtung für ein System nach Fig. 1; und
- Fig. 7: einen Querschnitt in Längsrichtung durch eine fünfte Ausführungsform einer Schutzvorrichtung für ein System nach Fig. 1.

### Wege zur Ausführung der Erfindung

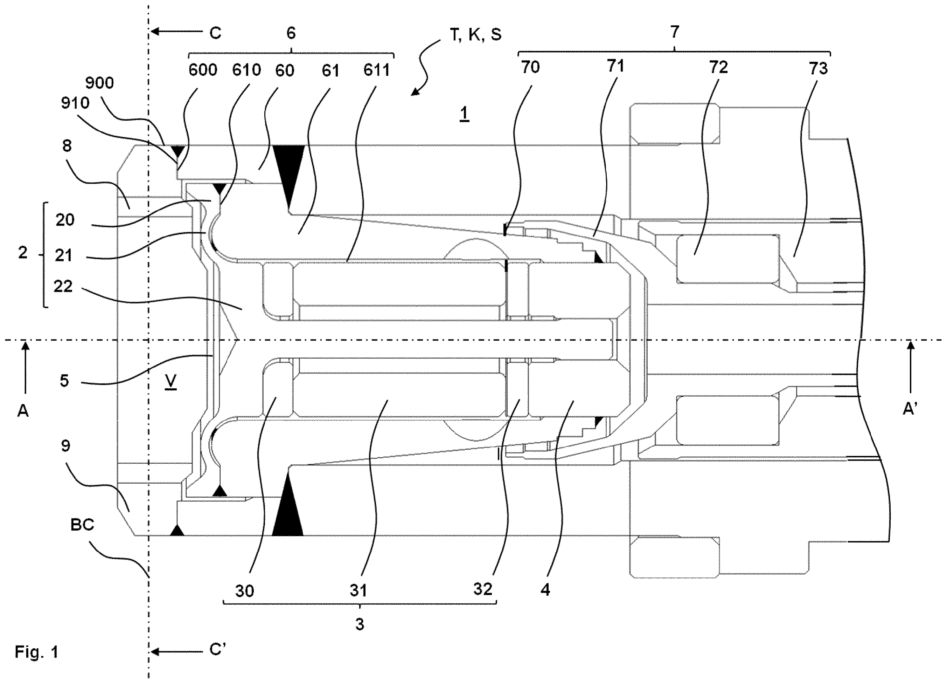

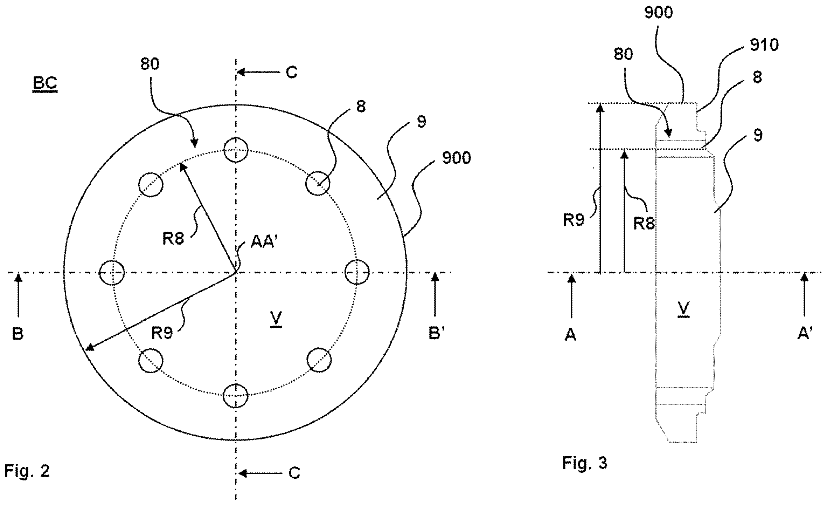

Die Fig. 1 bis 7 zeigen Querschnitte. Die Querschnitte sind in einem Koordinatensystem mit einer Längsachse AA', einer Horizontalachse BB' und einer Vertikalachse CC' dargestellt. Die drei Achsen stehen senkrecht aufeinander. Eine Richtung entlang der Längsachse AA' wird auch Längsrichtung AA' genannt, eine Richtung senkrecht zur Längsrichtung AA' wird auch Radialrichtung genannt. Horizontalachse BB' und Vertikalachse CC' spannen eine Radialebene BC auf. Radialrichtungen liegen in der Radialebene BC. Das Koordinatensystem gilt sowohl für den piezoelektrischen Sensor S als auch für die Schutzvorrichtung V. Fig. 1 zeigt einen Schnitt entlang der Längsrichtung AA' eines einsatzfertig in einer Wandung 1 einer Brennkammer K montierten piezoelektrischen Sensors S mit einer Schutzvorrichtung V des piezoelektrischen Sensors S. Fig. 2 zeigt einen Schnitt entlang der Radialrichtung einer ersten Ausführungsform einer Schutzvorrichtung V. Fig. 3 bis 7 zeigen Schnitte entlang der Längsrichtung einer ersten bis fünften Ausführungsform einer Schutzvorrichtung V. Die Brennkammer K des Verbrennungsmotors, der piezoelektrische Sensor S und die Schutzvorrichtung bilden ein System T. Der piezoelektrische Sensor S und seine Bestandteile sowie die Schutzvorrichtung V sind im Querschnitt bezüglich der Längsachse AA' weitgehend kreisförmig. Bei Kenntnis der vorliegenden Erfindung können ein piezoelektrischer Sensor und seine Bestandteile sowie eine Schutzvorrichtung im Querschnitt bezüglich einer Längsachse aber auch rechteckig, vieleckig, usw. sein.

Der piezoelektrische Sensor S weist eine Membran 2 und ein Gehäuse 6 auf. Bei mechanischer Befestigung des piezoelektrischen Sensors S in der Wandung 1 der Brennkammer K sind das Gehäuse 6 und die Membran 2 im Kontakt mit einem Medium in der Brennkammer K. Die mechanische Befestigung des piezoelektrischen Sensors S in der Wandung 1 der Brennkammer K erfolgt über das Gehäuse 6. Die mechanische Befestigung erfolgt vorzugsweise durch Kraft- und Formschluss wie eine Schraubverbindung, usw. Die Membran 2 erstreckt sich über ein Ende des piezoelektrischen Sensors S und deckt dieses Ende weitgehend ab. Das Ende liegt parallel zur Radialebene BC und wird in radialer Richtung von einem Ende des Gehäuses 6 begrenzt.

Die Membran 2 besteht aus mechanisch nachgiebigen Materialen wie aus Reinmetallen, Nickellegierungen, Kobaltlegierungen, Eisenlegierungen, usw. Die Membran 2 ist stempelförmig, mit einem radial von der Längsachse AA' beabstandeten radialen Membranbereich 20, einem sich in einem Mittenbereich der Membran 2 auf der Längsachse AA' erstreckenden zentralen Stempel 22 und einem elastischen Membranbereich 21, welcher den radialen Membranbereich 20 und den zentralen Stempel 22 mechanisch verbindet. Der elastische Membranbereich 21 ist dünn mit einer Membrandicke von rund 90µm. Aufgrund der geringen Membrandicke kann der elastische Mebranbereich 21 bei mechanischer Dehnung in Radialrichtung im Vergleich mit dem radialen Mebranbereich 20 und dem zentralen Stempel 22 leicht reissen. Der radiale Membranbereich 20, der elastische Membranbereich 21 und der zentrale Stempel 22 sind vorzugsweise einstückig.

Das Gehäuse 6 besteht aus mechanisch beständigen Materialen wie aus Reinmetallen, Nickellegierungen, Kobaltlegierungen, Eisenlegierungen, usw. Das Gehäuse 6 ist hohlzylinderförmig mit einer Hülse 60 und einer Antistrainhülse 61. Die Hülse 60 ist ein thermischer und mechanischer Schutz des piezoelektrischen Sensors S und nimmt Bestandteile des piezoelektrischen Sensors S auf und trägt diese Bestandteile. Die Antistrainhülse 61 verhindert, dass mechanische Verspannungen sich von einer mechanischen Befestigung des Sensors S in der Wandung der Brennkammer auf Bestandteile im Inneren des piezoelektrischen Sensors S übertragen. Hülse 60 und Antistrainhülse 61 sind mechanisch miteinander verbunden, Die mechanische Verbindung erfolgt vorzugsweise durch Stoffschluss wie Schweissen, Diffusionsschweissen, Thermokompressionsbonden, Löten, usw. Der Stoffschluss ist vollumfänglich, so dass die mechanische Verbindung druckdicht ist. Mit dem Adjektiv "druckdicht" wird eine mechanische Festigkeit gegen einen Druckverlauf mit Druckspitzen von 500bar und höher bezeichnet. Der Stoffschluss ist in Fig. 1 durch zwei grosse Dreiecke dargestellt. Bei Kenntnis der vorliegenden Erfindung können Hülse und Antistrainhülse auch einstückig sein.

Eine Endfläche 610 der Antistrainhülse 61 ist bezüglich der Längsachse AA' dem Membranbereich 20 zugewandt. Die Endfläche 610 der Antistrainhülse 61 wird auch radial innere Endfläche 610 des Gehäuses 6 genannt. Der radiale Membranbereich 20 stützt sich mechanisch auf der radial inneren Endfläche 610 des Gehäuses 6 ab. Die radial innere Endfläche 610 des Gehäuses 6 ist mit dem radialen Membranbereich 20 mechanisch verbunden. Die mechanische Verbindung erfolgt vorzugsweise durch Stoffschluss wie Schweissen, Diffusionsschweissen, Thermokompressionsbonden, Löten, usw. Der Stoffschluss ist vollumfänglich, so dass die mechanische Verbindung druckdicht ist. Der Stoffschluss ist in Fig. 1 durch zwei kleine Dreiecke dargestellt. Die Membran 2 ist somit über den Stoffschluss des radialen Membranbereiches 20 mit der radial inneren Endfläche 610 des Gehäuses 6 im Gehäuse 6 eingehängt.

Der piezoelektrische Sensor S weist einen Vorspannkörper 4 auf. Der Vorspannkörper 4 besteht aus mechanisch beständigen Materialen wie aus Reinmetallen, Nickellegierungen, Kobaltlegierungen, Eisenlegierungen, usw. Der Vorspannkörper 4 ist hohlzylinderförmig. Ein Ende der Antistrainhülse 61 ist bezüglich der Längsachse AA' vom radialen Membranbereich 20 abgewandt. Das Ende der Antistrainhülse 61 ist mit dem Vorspannkörper 4 mechanisch verbunden. Die mechanische Verbindung erfolgt vorzugsweise durch Stoffschluss wie Schweissen, Diffusionsschweissen, Thermokompressionsbonden, Löten, usw. Der Stoffschluss ist vollumfänglich, so dass die mechanische Verbindung druckdicht ist. Der Stoffschluss ist in Fig. 1 durch zwei kleine Dreiecke dargestellt.

Der piezoelektrische Sensor S weist einen piezoelektrischen Aufnehmer 3 auf. Der piezoelektrische Aufnehmer 3 gibt ein eindeutiges Ausgangssignal (= elektrische Polarisationsladungen) in Funktion einer bestimmten wirkenden Messgrösse (= Normalkraft). Der piezoelektrische Aufnehmer 3 ist bezüglich der Längsachse AA' zwischen dem zentralen Stempel 22 und dem Vorspannkörper 4 angeordnet. Der piezoelektrische Aufnehmer 3 ist unter mechanischer Vorspannung zwischen dem zentralen Stempel 22 und dem Vorspannkörper 4 angeordnet. Der piezoelektrische Aufnehmer 3 wird vom zentralen Stempel 22 getragen. Der piezoelektrische Aufnehmer 3 und der zentrale Stempel 22 sind durch einen Spalt 611 vom Gehäuse 6 beabstandet. Stosswellen, welche in den radialen Membranbereich 20 einkoppeln und sich von dort über die radial innere Endfläche 610 des Gehäuses 6 im Gehäuse 6 ausbreiten, können den Spalt 611 nicht überwinden und somit nicht auf den piezoelektrischen Aufnehmer 3 und den zentralen Stempel 22 wirken. Die Stosswellen können somit den piezoelektrischen Aufnehmer 3 nicht erreichen und sind daher für das defektempfindliche piezoelektrische Material unschädlich.

Der piezoelektrische Aufnehmer 3 weist ein Ausgleichelement 30, ein erstes elektrisches Isolationselement 32 und mindestens ein piezoelektrisches Aufnehmerelement 31 auf. Bezogen auf die Längsachse AA' ist das piezoelektrische Aufnehmerelement 31 zwischen dem Ausgleichelement 30 und dem elektrischen Isolationselement 32 angeordnet. Das Ausgleichelement 30 verteilt eine von der Membran 2 erfasste Normalkraft gleichmässig auf das piezoelektrische Aufnehmerelement 31. Die Membran 2 leitet die Normalkraft über den zentralen Stempel 22 auf das Ausgleichelement 30 und somit auf das piezoelektrische Aufnehmerelement 31. Die Normalkraft wirkt in Richtung der Längsachse AA'. Das Ausgleichelement 30 ist zylinderförmig und besteht aus elektrisch leitfähigem und mechanisch steifem Material wie aus Reinmetallen, Nickellegierungen, Kobaltlegierungen, Eisenlegierungen, elektrisch leitender Keramik, Keramik mit elektrisch leitender Beschichtung, usw. Der zentrale Stempel 22 ist im flächigen mechanischen Kontakt mit dem Ausgleichelement 30. Das Ausgleichelement 30 ist auch im flächigen mechanischen Kontakt mit dem piezoelektrischen Aufnehmerelement 31. Bei Kenntnis der vorliegenden Erfindung kann der Fachmann den piezoelektrischen Aufnehmer auch ohne Ausgleichelement realisieren. Das erste elektrische Isolationselement 32 ist hohlzylinderförmig und besteht aus elektrisch isolierendem und mechanisch steifem Material wie Keramik, Al₂O₃-Keramik, Saphir, usw. Das erste elektrische Isolationselement 32 isoliert das piezoelektrische Aufnehmerelement 31 elektrisch gegenüber dem Vorspannkörper 4. Die mechanische Vorspannung spannt die Bestandteile des piezoelektrischen Aufnehmers 3 mechanisch derart vor, dass auf Stirnflächen des piezoelektrischen Aufnehmerelementes 31 und des Ausgleichselementes 30, welche einerseits im flächigen elektrischen Kontakt sind, und dass sich auf Stirnflächen des piezoelektrischen Aufnehmerelementes 31 mit der Elektrode 70, welche andererseits im flächigen elektrischen Kontakt sind, auch unter Normalkrafteinwirkung keine nichtkontaktierten Bereiche mit lokalen hohen elektrischen Spannungen und elektrischen Kriechströmen auftreten. Die mechanische Vorspannung spannt die Bestandteile des piezoelektrischen Aufnehmers 3 mechanisch auch derart vor, dass sind Oberflächenrauheiten auf den Stirnflächen des piezoelektrischen Aufnehmerelementes 31, des Ausgleichelementes 30 und der Elektrode 70 schliessen, was zu einer exzellenten Linearität des piezoelektrischen Sensors S führt.

Das piezoelektrische Aufnehmerelement 31 ist zylinderförmig und besteht aus piezoelektrischem Material wie Quarz (SiO₂ Einkristall), Calcium-Gallo-Germanat (Ca₃Ga₂Ge₄O₁₄ oder CGG), Langasit (La₃Ga₅SiOᵢ₄ oder LGS), Turmalin, Galliumorthophosphat, Piezokeramik, usw. Das piezoelektrische Aufnehmerelement 31 ist kristallographisch so orientiert geschnitten, dass es eine hohe Empfindlichkeit für die aufzunehmende Normalkraft hat. Vorzugsweise ist das piezoelektrische Material für den Transversaleffekt so orientiert in Stäbe geschnitten, dass elektrische Polarisationsladungen auf transversal zur Normalkraft stehen Oberflächen erzeugt werden.

Das piezoelektrische Material ist für den Transversaleffekt in drei stabförmige piezoelektrische Aufnehmerelement 31 geschnitten. Die piezoelektrischen Aufnehmerelemente 31 sind im Winkel von 120° zueinander angeordnet. Die piezoelektrischen Aufnehmerelemente 31 sind äquidistant zur Längsachse AA' angeordnet. Die Normalkraft wirkt über Stirnflächen der piezoelektrischen Aufnehmerelemente 31 auf das piezoelektrische Material ein und erzeugt auf Seitenflächen der piezoelektrischen Aufnehmerelemente 31 elektrische Polarisationsladungen. Pro piezoelektrisches Aufnehmerelement 31 werden auf der der Längsachse AA' zugewandten Seitenfläche negative elektrische Ladungen erzeugt und auf der von der Längsachse AA' abgewandten Seitenfläche werden positive elektrische Ladungen erzeugt. Die piezoelektrischen Aufnehmerelemente 31 sind metallisiert. Die Metallisierungen sind elektrisch leitend. Pro piezoelektrisches Aufnehmerelement 31 reicht eine erste Metallisierung von der der Längsachse AA' zugewandten Seitenfläche auf die der Membran 2 abgewandten Stirnfläche und eine zweite Metallisierung reicht von der der Längsachse AA' abgewandten Seitenfläche auf die der Membran 2 zugewandte Stirnfläche. Die erste und zweite Metallisierung sind elektrisch voneinander isoliert. Pro piezoelektrisches Aufnehmerelement 31 leitet die erste Metallisierung negative elektrische Ladungen auf die der Membran 2 abgewandte Stirnfläche ab und die zweite Metallisierung leitet positive elektrische Ladungen auf die der Membran 2 zugewandte Stirnfläche ab.

Der piezoelektrische Sensor S weist eine Ableitungsanordnung 7 mit der Elektrode 70, einer elektrischen Ladungsableitung 71, einem zweiten elektrischen Isolationselement 72 und einem Ableitungskörper 73 auf. Die Elektrode 70 und die elektrische Ladungsableitung 71 bestehen aus elektrisch leitfähigem Material wie aus Reinmetallen, Nickellegierungen, Kobaltlegierungen, Eisenlegierungen, usw. Die Elektrode 70 ist folienartig. Die Elektrode 70 ist weitgehend in einer Radialebene BC angeordnet. Die Elektrode 70 reicht durch eine Öffnung der Antistrainhülse 61. Ein erstes Ende der Elektrode 70 ist mechanisch mit der ersten Metallisierung der der Membran 2 abgewandten Stirnflächen verbunden. Die mechanische Verbindung erfolgt vorzugsweise durch die mechanische Vorspannung. Ein zweites Ende der Elektrode 70 ist mechanisch mit der elektrischen Ladungsableitung 71 verbunden. Die mechanische Verbindung erfolgt vorzugsweise durch Stoffschluss wie Schweissen, Diffusionsschweissen, Thermokompressionsbonden, Löten, usw. Die elektrische Ladungsableitung 71 ist hohlzylinderförmig und leitet die von der Elektrode 70 abgegriffenen negativen elektrischen Ladungen an eine figürlich nicht dargestellte elektrische Steckverbindung ab. Über die elektrische Steckverbindung sind die negativen elektrischen Ladungen abgreifbar und einer ebenfalls nicht dargestellte Auswerteeinheit ableitbar, wo eine elektrische Verstärkung und Auswertung der negativen elektrischen Ladungen erfolgen kann. Die elektrische Ladungsableitung 71 ist in einem Ableitungskörper 73 angeordnet. Der Ableitungskörper 73 hält die elektrische Ladungsableitung 71 mechanisch in unverrückbarer Position. Der Ableitungskörper 73 ist hohlzylinderförmig und besteht aus mechanisch beständigem Material wie aus Reinmetallen, Nickellegierungen, Kobaltlegierungen, Eisenlegierungen, usw. Die elektrische Ladungsableitung 71 ist über ein zweites elektrisches Isolationselement 72 elektrisch gegenüber dem Ableitungskörper 73 isoliert. Das zweite elektrische Isolationselement 72 ist zylinderförmig und besteht aus elektrisch isolierendem und mechanisch steifem Material wie Keramik, Al₂O₃-Keramik, Saphir, usw. Positive elektrische Ladungen der zweiten Metallisierung der der Membran 2 zugewandten Stirnflächen werden über das Ausgleichelement 30 auf die Membran 2 und von der Membran 2 auf das geerdete Gehäuse 6 elektrisch abgeleitet.

Das System T weist eine Schutzvorrichtung V auf. Die Schutzvorrichtung V ist zylinderförmig und besteht aus elektrisch leitfähigem und mechanisch steifem Material wie aus Reinmetallen, Nickellegierungen, Kobaltlegierungen, Eisenlegierungen, elektrisch leitender Keramik, Keramik mit elektrisch leitender Beschichtung, usw. Eine Endfläche 910 der Schutzvorrichtung V ist bezüglich der Längsachse AA' dem Gehäuse 6 zugewandt. Die Endfläche 910 der Schutzvorrichtung V stützt sich flächig auf einer Endfläche 600 der Hülse 60 ab. Die Endfläche 600 der Hülse 60 wird auch radial äussere Endfläche 600 des Gehäuses 6 genannt. Die radial äussere Endfläche 600 des Gehäuses 6 ist in Radialrichtung in grösserer Distanz zur Längsachse AA' als die radial innere Endfläche 610 des Gehäuses 6 angeordnet. Die Endfläche 910 der Schutzvorrichtung V ist mechanisch mit der radial äusseren Endfläche 600 des Gehäuses 6 verbunden. Die mechanische Verbindung erfolgt vorzugsweise durch Stoffschluss wie Schweissen, Diffusionsschweissen, Thermokompressionsbonden, Löten, usw. Der Stoffschluss ist vollumfänglich, so dass die mechanische Verbindung druckdicht ist. Der Stoffschluss ist in Fig. 1 durch zwei Dreiecke dargestellt. Bei Temperaturspitzen schlägt ein Wärmestrom auf die Schutzvorrichtung V auf und wird von der Endfläche 910 der Schutzvorrichtung V in die radial äussere Endfläche 600 des Gehäuses 6 abgeleitet. Bei Stosswellen welche auf die Schutzvorrichtung V prallen, stützt sich die Endfläche 910 der Schutzvorrichtung V über die radial äussere Endfläche 600 des Gehäuses 6 auf dem Gehäuse 6 auf. Die Stosswellen koppeln in die der Brennkammer k zugewandten Seite der Schutzvorrichtung V ein und breiten sich über die flächige Abstützung ins Gehäuse 6 aus.

Die Fig. 1 bis 7 zeigen mehrere Ausführungsformen einer Schutzvorrichtung V. Die Schutzvorrichtung V weist einen Schutzkörper 9 auf. Der Schutzkörper 9 ist in der Radialebene BC angeordnet (siehe Fig. 2). Ein Mittelpunkt des Schutzkörpers 9 liegt auf der Längsachse AA'. Vorzugsweise weist der Schutzkörper 9 einen konstanten Schutzkörperradius R9 auf. Der Schutzkörperradius 9 ist eine Distanz zwischen dem Mittelpunkt des Schutzkörpers 9 auf der Längsachse AA' und einem radialen Ende 900 der Schutzvorrichtung V. Entlang der Längsachse AA' weist der Schutzkörper 9 eine maximale Dicke von kleiner 5mm, vorzugsweise 2mm, vorzugsweise 1mm auf. Der Schutzkörperradius R9 ist kleiner 15mm, vorzugsweise kleiner 10mm, vorzugsweise kleiner 5mm.

Im Schutzkörper 9 sind mehrere Durchgänge 8 angeordnet. Vorzugsweise sind im Schutzkörper 9 mindestens zwei Durchgänge 8 angeordnet, vorzugsweise mindestens acht Durchgänge 8, vorzugsweise mindestens zwanzig Durchgänge 8. Die Durchgänge 8 sind in Radialrichtung bezüglich der Längsachse AA' in einem Durchgangsbereich 80 der Schutzvorrichtung V angeordnet. Auf der der Membran 2 zugewandten Seite der Schutzvorrichtung V ist der Durchgangsbereich 80 nahe am radialen Ende 900 der Schutzvorrichtung V angeordnet. Im Durchgangsbereich 80 ist eine Mitte der Durchgänge 8 vorzugsweise auf mindestens einem Durchgangsradius R8 angeordnet. Im Durchgangsbereich 80 sind die Durchgänge 8 vorzugsweise auf einem konstanten Durchgangsradius R8 angeordnet. Im Durchgangsbereich 80 sind die Durchgänge 8 auf dem Durchgangsradius R8 äquidistant zueinander angeordnet. Der Durchgangsradius R8 ist eine Distanz zwischen dem Mittelpunkt des Schutzkörpers 9 auf der Längsachse AA' und der Mitte der Durchgänge 8 auf einer der Membran 2 zugewandten Seite der Schutzvorrichtung V. Diese Distanz bildet den grösstmöglichen Abstand der Durchgänge 8 zum piezoelektrischen Aufnehmer 3. Ein Verhältnis R8/R9 von Durchgangsradius R8 zu Schutzkörperradius R9 beträgt mindestens 50%, vorzugsweise mindestens 60%, vorzugsweise mindestens 70%.

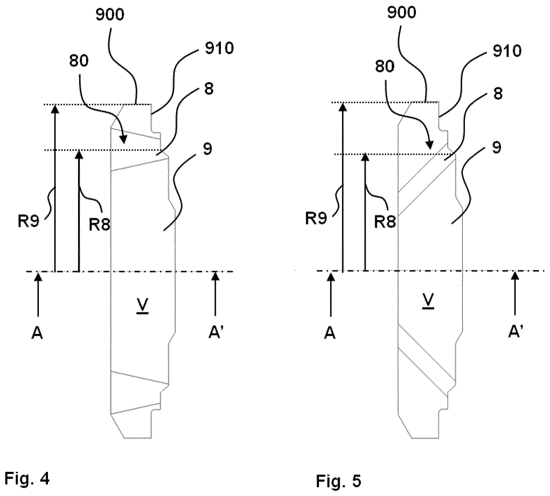

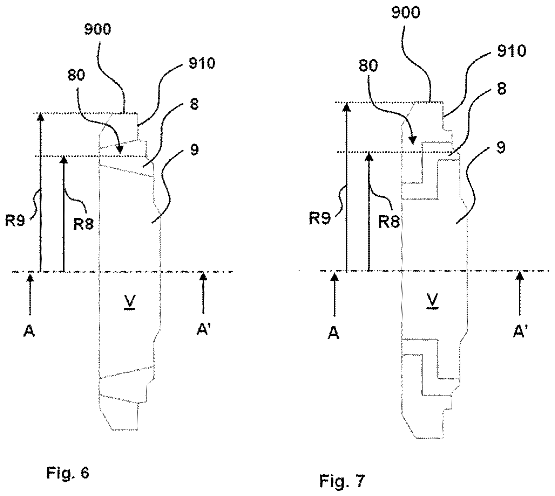

Die Durchgänge 8 durchdringen den Schutzkörper 9 vollständig. Die Durchgänge 8 verlaufen weitgehend in Längsrichtung AA'. Mit dem Adjektiv "weitgehend" wird ein Verlauf der Durchgänge 8 in einem Winkel von 0 bis rund 60° bezüglich der Längsachse AA' bezeichnet. In der ersten Ausführungsform der Schutzvorrichtung V nach Fig. 1 bis 3 verlaufen die Durchgänge 8 parallel zur Längsachse AA', mit einem Winkel von 0° bezüglich der Längsachse AA'. In den Ausführungsformen der Schutzvorrichtung V nach Fig. 4 bis 7 verlaufen die Durchgänge 8 schräg bezüglich der Längsachse AA'. In den Ausführungsformen der Schutzvorrichtung V nach Fig. 4 und 6 verlaufen die Durchgänge 8 mit einem Winkel von rund 20° bezüglich der Längsachse AA'. In der Ausführungsform der Schutzvorrichtung V nach Fig. 7 verlaufen die Durchgänge 8 z-förmig mit einem Winkel von bereichsweise rund 0° oder rund 90° bezüglich der Längsachse AA'. In der dritten Ausführungsform der Schutzvorrichtung V nach Fig. 5 verlaufen die Durchgänge 8 mit einem Winkel von rund 45° bezüglich der Längsachse AA'. In den Ausführungsformen der Schutzvorrichtung V nach Fig. 1 bis 3, 5 und 7 weisen die Durchgänge 8 einen konstanten Radius auf. In den Ausführungsformen der Schutzvorrichtung V nach Fig. 4 und 6 weisen die Durchgänge 8 einen nichtkonstanten Radius auf. In den Ausführungsformen der Schutzvorrichtung V nach Fig. 4 und 6 sind die Durchgänge 8 konisch. In der zweiten Ausführungsformen der Schutzvorrichtung V nach Fig. 4 ist der Radius der Durchgänge 8 auf einer der Brennkammer K zugewandten Seite der Schutzvorrichtung V grösser als auf der der Membran 2 zugewandten Seite der Schutzvorrichtung V, der Radius der Durchgänge 8 ist konisch abnehmend. Stosswellen, welche in die Durchgänge 8 mit konisch abnehmendem Radius gelangen, haben verglichen mit Durchgängen 8 mit konstantem Radius eine erhöhte Wahrscheinlichkeit mit Wänden in den Durchgängen 8 in Wechselwirkung zu treten und in den Schutzkörper 9 einzukoppeln. In der vierten Ausführungsform der Schutzvorrichtung V nach Fig. 6 ist der Radius der Durchgänge 8 auf der der Brennkammer K zugewandten Seite der Schutzvorrichtung V kleiner als auf der der Membran 2 zugewandten Seite der Schutzvorrichtung V. Stosswellen, welche in die Durchgänge 8 mit konisch zunehmendem Radius gelangen, haben verglichen mit Durchgängen 8 mit konstantem Radius eine erniedrigte Wahrscheinlichkeit mit Wänden in den Durchgängen 8 in Wechselwirkung zu treten und in den Schutzkörper 9 einzukoppeln. Der Radius ist kleiner 0.5mm, vorzugsweise kleiner 0.4mm, vorzugsweise kleiner 0.3mm.

Die Schutzvorrichtung V deckt eine vom piezoelektrischen Aufnehmer 3 abgewandte Seite der Membran 2 weitgehend ab. Auf der der Membran 2 zugewandten Seite der Schutzvorrichtung V kommunizieren die Durchgänge 8 mit einer Kavität 5. Die Kavität 5 ist bezüglich der Längsachse AA' zwischen der Schutzvorrichtung V und der Membran 2 angeordnet. Medium gelangt aus der Brennkammer K durch die Durchgänge 8 in die Kavität 5. Die Durchgänge 8 verlaufen weitgehend in Längsrichtung AA'. Die Durchgänge 8 sind direkt auf den radialen Membranbereich 20 der Membran 2 gerichtet. Stosswellen, welche durch die Durchgänge 8 in die Kavität 5 gelangen, treten somit im radialen Membranbereich 20 in eine erste Wechselwirkung mit der Membran 2. Die Stosswellen koppeln bei der ersten Wechselwirkung in den radialen Membranbereich 20 ein. Da sich der radiale Membranbereich 20 flächig auf der radial inneren Endfläche 610 des Gehäuses 6 abstützt, breiten sich die Stosswellen über die radial innere Endfläche 610 des Gehäuses 6 in das Gehäuse 6 aus. Die Stosswellen werden somit vom Gehäuse 6 aufgefangen. Die Stosswellen breiten sich in Längsrichtung AA' weiter im Gehäuse 6 aus, ohne die Membran 2 in Radialrichtung mechanisch zu dehnen. Insbesondere wird dadurch der flexible Membranbereich 21 der Membran 2 in Radialrichtung mechanisch nicht gedehnt. Aufgrund des Spaltes 611 können die Stosswellen den piezoelektrischen Aufnehmer 3 nicht erreichen und sind daher für das defektempfindliche piezoelektrische Material unschädlich.

Die Durchgänge 8 und die Kavität 5 bilden ein Labyrinth. Dabei sind die Durchgänge 8 in einem grösstmöglichen Abstand zum piezoelektrischen Aufnehmer 3 angeordnet. Stosswellen, welche durch die Durchgänge 8 in die Kavität 5 gelangen, müssen somit einen grossen Weg durch das Labyrinth zurücklegen, bevor sie in Wechselwirkung mit dem zentralen Stempel 22 kommen und kinetische Restenergie in den zentralen Stempel 22 einkoppeln können. Auf dem grossen Weg durch das Labyrinth treten Stosswellen mehrmals in Wechselwirkung mit dem Schutzkörper 9 und der Membran 2. Die nach solchen mehrmaligen Wechselwirkungen in den zentralen Stempel 22 eingekoppelten Stosswellen weisen nur noch eine kinetische Restenergie auf, welche vom zentralen Stempel 22 auf das Ausgleichelement 30 und vom Ausgleichelement 30 auf das piezoelektrische Aufnehmerelement 31 wirkt. Die kinetische Restenergie der Stosswellen ist unschädlich für das defektempfindliche piezoelektrische Material.

Bei Kenntnis der vorliegenden Erfindung kann der Fachmann die Schutzvorrichtung V auch zum Schutz des piezoelektrischen Aufnehmers vor Druckspitzen verwenden, bei welchen Druckspitzen sich Teile des Mediums nicht schneller als die Schallgeschwindigkeit des Mediums bewegen. Solche Druckspitzen bewegen sich mit Schallgeschwindigkeit im Medium. Solche Druckspitzen müssen auch keinen sprunghaften Druckanstieg und auch keinen sprunghaften Druckabfall aufweisen. Solche Druckspitzen treten beispielweise bei Pfeifenschwingungen in der Kavität 5 auf.

Wäre nur ein Durchgang genau auf der Längsachse AA' im Schutzkörper 9 angeordnet, oder wäre ein Durchgang in einer geringen radialen Entfernung zur Längsachse AA' im Schutzkörper 9 angeordnet, welche geringe radiale Entfernung kleiner/gleich der Ausdehnung des zentralen Stempels 22 in Radialrichtung ist, so wäre der Durchgang direkt auf den zentralen Stempel 22 gerichtet und der Durchgang wäre in einem kurzen Abstand zum piezoelektrischen Aufnehmer 3 angeordnet. Stosswellen, welche durch den Durchgang in die Kavität 5 gelangen, kämen somit in eine erste Wechselwirkung mit dem zentralen Stempel 22 und würden in den zentralen Stempel 22 einkoppeln und vom zentralen Stempel 22 auf das Ausgleichelement 30 und vom Ausgleichelement 30 auf das piezoelektrische Aufnehmerelement 31 wirken. Die kinetische Energie der so eingekoppelten Stosswellen ist schädlich für das defektempfindliche piezoelektrische Material. Genau das wird durch die Erfindung vermieden.

Die Kavität 5 erstreckt sich in Radialrichtung vollständig über die Membran 2. Schutzvorrichtung V und Membran 2 sind durch die Kavität 5 voneinander beabstandet. Ein Abstand von Schutzvorrichtung V und Membran 2 und somit eine Höhe der Kavität 5 entlang der Längsachse AA' ist weitgehend konstant. Die Höhe der Kavität 5 ist vorzugsweise kleiner als der Radius der Durchgänge 10. Dadurch wird sichergestellt, dass bei Stosswellen, die in die Kavität 5 gelangen, keine Resonanzschwingungen auftreten, welche das Erfassen des Druckverlaufs verfälschen können. Resonanzschwingungen in der Kavität 5 wirken als Pseudo-Normalkraft auf die Membran 2 und über die Membran 2 auf den piezoelektrischen Aufnehmer 3 und erzeugen elektrische Pseudo-Polarisationsladungen, welche nicht proportional zur Grösse des Druckverlaufes sind.

### Bezugszeichenliste

- AA': Längsachse
- BB': Horizontalachse
- BC: Radialebene
- CC': Vertikalachse
- K: Brennkammer
- R8: Durchgangsradius
- R9: Schutzkörperradius
- S: piezoelektrischer Sensor
- T: System
- V: Schutzvorrichtung
- 1: Wandung
- 2: Membran
- 3: piezoelektrischer Aufnehmer
- 4: Vorspannkörper
- 5: Kavität
- 6: Gehäuse
- 7: Ableitungsanordnung
- 8: Durchgang
- 9: Schutzkörper
- 20: radialer Membranbereich
- 21: elastischer Membranbereich
- 22: zentraler Stempel
- 30: Ausgleichselement
- 31: piezoelektrisches Aufnehmerelement
- 32: erstes elektrisches Isolationselement
- 60: Hülse
- 61: Antistrainhülse
- 70: Elektrode
- 71: elektrische Ladungsableitung
- 72: zweites elektrisches Isolationselement
- 73: Ableitungskörper
- 80: Durchgangsbereich
- 600: Endfläche des Gehäuses
- 610: Endfläche der Antistrainhülse
- 611: Spalt
- 900: radiales Ende der Schutzvorrichtung
- 910: Endfläche der Schutzvorrichtung

## Patentansprüche

1. System (T) mit einer Brennkammer (K) eines Verbrennungsmotors, einem piezoelektrischen Sensor (S) zum Erfassen eines Druckverlaufes in der Brennkammer (K) und einer Schutzvorrichtung (V) des piezoelektrischen Sensors (S); wobei der piezoelektrische Sensor (S) eine Membran (2) und einen piezoelektrischen Aufnehmer (3) aufweist; wobei der piezoelektrische Sensor (S) in einer Wandung (W) der Brennkammer (K) mechanisch befestigt ist; wobei die Schutzvorrichtung (V) eine vom piezoelektrischen Aufnehmer (3) abgewandte Seite der Membran (2) weitgehend abdeckt; und wobei die Schutzvorrichtung (V) Durchgänge (8) aufweist, durch welche flüssiges oder gasförmiges Medium aus der Brennkammer (K) zur Membran (2) gelangt, **dadurch gekennzeichnet, dass** die Durchgänge (8) auf einer der Membran (2) zugewandten Seite der Schutzvorrichtung (V) mit einer Kavität (5) kommunizieren, welche Kavität (5) bezüglich einer Längsachse (AA') zwischen der Schutzvorrichtung (V) und der Membran (2) angeordnet ist; dass die Schutzvorrichtung (V) einen Schutzkörper (9) aufweist; dass eine Mitte der Durchgänge (8) im Schutzkörper (9) bezüglich der Längsachse (AA') auf mindestens einem Durchgangsradius (R8) angeordnet sind, welcher Durchgangsradius (R8) eine Distanz zwischen einem Mittelpunkt des Schutzkörpers (9) auf der Längsachse (AA') und der Mitte der Durchgänge (8) auf einer der Membran (2) zugewandten Seite der Schutzvorrichtung (V) ist; dass die Membran (2) einen radialen Membranbereich (20), einen elastischen Membranbereich (21) und einen zentralen Stempel (22) aufweist, welcher radiale Membranbereich (20) von einem Mittenbereich der Membran (2) radial beabstandet ist, welcher zentrale Stempel (22) sich im Mittenbereich auf der Längsachse (AA') erstreckt, und welcher elastische Membranbereich (21) den radialen Membranbereich (20) und den zentralen Stempel (22) mechanisch verbindet; dass der piezoelektrische Sensor (S) ein Gehäuse (6) aufweist, welcher radiale Membranbereich (20) sich flächig auf einer radial inneren Endfläche (610) des Gehäuses (6) abstützt; dass der zentrale Stempel (22) den piezoelektrischen Aufnehmer (3) trägt; und dass die Durchgänge (8) direkt auf den radialen Membranbereich (20) gerichtet sind.

2. Schutzvorrichtung (V) zur Verwendung im System (T) nach Anspruch 1, **dadurch gekennzeichnet, dass** die Durchgänge (8) schräg oder parallel zur Längsachse (AA') verlaufen.

3. Schutzvorrichtung (V) nach Anspruch 1, **dadurch gekennzeichnet, dass** der Schutzkörper (9) einen Schutzkörperradius (R9) aufweist; und dass ein Verhältnis R8/R9 von Durchgangsradius (R8) zu Schutzkörperradius (R9) mindestens 50%, vorzugsweise mindestens 60%, vorzugsweise mindestens 70% beträgt.

4. Schutzvorrichtung (V) nach einem der Ansprüche 1 bis 3, **dadurch gekennzeichnet, dass** im Schutzkörper (9) mindestens sechs Durchgänge (8), oder mindestens acht Durchgänge (8), oder mindestens zwölf Durchgänge (8) angeordnet sind; und dass die Durchgänge (8) den Schutzkörper (9) vollständig durchdringen.

5. System (T) nach Anspruch 1, **dadurch gekennzeichnet, dass** die Schutzvorrichtung (V) stoffschlüssig mit dem Gehäuse (6) verbunden ist.

6. System (T) nach einem der Ansprüche 1 oder 5, **dadurch gekennzeichnet, dass** der radiale Membranbereich (20) stoffschlüssig mit der radial inneren Endfläche (610) des Gehäuses (6) verbunden ist.

7. System (T) nach einem der Ansprüche 1, 5 oder 6, **dadurch gekennzeichnet, dass** Stosswellen, welche durch die Durchgänge (8) auf den radialen Membranbereich (20) gelangen, im radialen Membranbereich (20) in eine erste Wechselwirkung mit der Membran (2) treten; dass die Stosswellen bei der ersten Wechselwirkung in den radialen Membranbereich (20) einkoppeln; und dass sich die eingekoppelten Stosswellen über die flächige Abstützung des radialen Membranbereiches (20) auf der Endfläche (610) des Gehäuses (6) vom radialen Membranbereich (20) weiter in das Gehäuse (6) ausbreiten.

8. System (T) nach Anspruch 7, **dadurch gekennzeichnet, dass** sich die Stosswellen in Längsrichtung (AA') im Gehäuse (6) ausbreiten, ohne die Membran (2) in einer Radialrichtung mechanisch zu dehnen.

9. System (T) nach einem der Ansprüche 1, 5 bis 8, **dadurch gekennzeichnet, dass** die Membran (2) über den radialen Membranbereich (20) im Gehäuse (6) eingehängt ist; und dass der piezoelektrische Aufnehmer (3) und der zentrale Stempel (22) durch einen Spalt (611) vom Gehäuse (6) beabstandet sind.

10. System (T) nach einem der Ansprüche 1, 5 bis 9, **dadurch gekennzeichnet, dass** Schutzvorrichtung (V) und Membran (2) durch eine Kavität (5) voneinander beabstandet sind; dass die Durchgänge (8) mit der Kavität (5) kommunizieren; dass Stosswellen, welche durch die Durchgänge (8) in ein Labyrinth gelangen, im Labyrinth mehrmals in Wechselwirkung mit dem Schutzkörper (9) und der Membran (2) treten; und dass Stosswellen im Labyrinth erst nach mehrmaligen Wechselwirkungen in den zentralen Stempel (22) einkoppeln.

11. System (T) nach Anspruch 10, **dadurch gekennzeichnet, dass** eine Höhe der Kavität (5) kleiner als ein Radius der Durchgänge (8) ist.

## Claims

1. A system (T) comprising a combustion chamber (K) of an internal combustion engine, a piezoelectric sensor (S) for capturing a pressure profile in the combustion chamber (K), and a protective device (V) for the piezoelectric sensor (S); wherein the piezoelectric sensor (S) comprises a membrane (2) and a piezoelectric transducer (3); wherein the piezoelectric sensor (S) is mechanically secured in a wall (W) of the combustion chamber (K); wherein the protective device (V) substantially covers a face of the membrane (2) that faces away from the piezoelectric transducer (3); and wherein the protective device (V) comprises passages (8) through which liquid or gaseous medium passes from the combustion chamber to the membrane (2), **characterized in that** on a face of the protective device (V) that faces the membrane (2) said passages (8) communicate with a cavity (5), which cavity (5) is arranged between the protective device (V) and the membrane (2) with respect to a longitudinal axis (AA'); the protective device (V) comprises a protective body (9); with respect to the longitudinal axis (AA') a center of the passages (8) in the protective body (9) are arranged on at least one passage radius (R8); said passage radius (R8) being a distance between a center of the protective body (9) on the longitudinal axis (AA') and the centers of the passages (8) on a face of the protective device (V) that faces the membrane (2); the membrane (2) comprises a radial membrane portion (20), an elastic membrane portion (21) and a central plunger (22), said radial membrane portion (20) being radially spaced apart from a central portion of the membrane (2), said central plunger (22) extending in the central portion on the longitudinal axis (AA'), and said elastic membrane portion (21) mechanically connecting the radial membrane portion (20) with the central plunger (22); the piezoelectric sensor (S) comprises a housing (6), said radial membrane portion (20) being supported in a planar manner on a radially inner end face (610) of said housing (6); the central plunger (22) supports the piezoelectric transducer (3); and **in that** the passages (8) directly aim at the radial membrane portion (20).

2. The protective device (V) for use in the system (T) according to claim 1, **characterized in that** the passages (8) extend at an angle or in parallel to the longitudinal axis (AA').

3. The protective device (V) according to claim 1, **characterized in that** the protective body (9) has a protective body radius (R9); and **in that** a ratio R8/R9 of passage radius (R8) and protective body radius (R9) is at least 50%, preferably at least 60%, preferably at least 70%.

4. The protective device (V) according to any of claims 1 to 3, **characterized in that** at least six passages (8) or at least eight passages (8) or at least twelve passages (8) are arranged in the protective body (9); and **in that** the passages (8) completely pass through the protective body (9) .

5. The system (T) according to claim 1, **characterized in that** the protective device (V) is connected to the housing (6) via a material bond.

6. The system (T) according to any of claims 1 or 5, **characterized in that** the radial membrane portion (20) is connected to the radially inner end face (610) of the housing (6) via a material bond.

7. The system (T) according to any of claims 1, 5 or 6, **characterized in that** shock waves reaching the radial membrane portion (20) through the passages (8) have a first interaction with the membrane (2) in the radial membrane portion (20); upon said first interaction the shock waves are coupled into the radial membrane portion (20); and **in that** from the radial membrane portion (20) the coupled-in shock waves propagate further into the housing (6) via the planar support of the radial membrane portion (20) on the end face (610) of the housing (6).

8. The system (T) according to claim 7, **characterized in that** the shock waves propagate in the housing (6) in the longitudinal direction (AA') without mechanical stretching of the membrane (2) in a radial direction.

9. The system (T) according to any of claims 1, 5 to 8, **characterized in that** the membrane (2) is mounted in the housing (6) via the radial membrane portion (20); and **in that** the piezoelectric transducer (3) and the central plunger (22) are spaced from the housing (6) by a gap (611) .

10. The system (T) according to any of claims 1, 5 to 9, **characterized in that** protective device (V) and membrane (2) are spaced from each other by a cavity (5); the passages (8) communicate with the cavity (5); shock waves passing through the passages (8) enter in a labyrinth, in which labyrinth they interact with the protective body (9) and the membrane (2) several times; and **in that** shock waves couple into the central punch (22) only after multiple interactions in the labyrinth.

11. The system (T) according to claim 10, **characterized in that** a height of the cavity (5) is smaller than a radius of the passages (8).

## Revendications

1. Système (T) comprenant une chambre de combustion (K) d'un moteur à combustion interne, un capteur piézoélectrique (S) pour capturer un profil de pression dans la chambre de combustion (K) et un dispositif de protection (V) du capteur piézoélectrique (S); dans lequel le capteur piézoélectrique (S) comprend une membrane (2) et un transducteur piézoélectrique (3); dans lequel le capteur piézoélectrique (S) est fixé mécaniquement dans une paroi (W) de la chambre de combustion (K); dans lequel le dispositif de protection (V) recouvre sensiblement une face de la membrane (2) opposée au transducteur piézoélectrique (3); et dans lequel le dispositif de protection (V) comprend des passages (8) à travers lesquels un milieu liquide ou gazeux passe de la chambre de combustion à la membrane (2), **caractérisé en ce que** lesdits passages (8) communiquent avec une cavité (5) sur une face du dispositif de protection (V) faisant face à la membrane (2), laquelle cavité (5) étant disposée entre le dispositif de protection (V) et la membrane (2) par rapport à un axe longitudinal (AA'); le dispositif de protection (V) comprend un corps protecteur (9); un centre des passages (8) dans le corps protecteur (9) est disposé sur au moins un rayon de passage (R8) par rapport à l'axe longitudinal (AA'); ledit rayon de passage (R8) étant une distance entre un centre du corps protecteur (9) sur l'axe longitudinal (AA') et le centre des passages (8) sur une face du dispositif de protection (V) faisant face à la membrane (2); la membrane (2) comprend une partie de membrane radiale (20), une partie de membrane élastique (21) et un piston central (22), ladite partie de membrane radiale (20) étant radialement espacée d'une partie centrale de la membrane (2), ledit piston central (22) s'étendant dans la portion centrale sur l'axe longitudinal (AA') et ladite partie de membrane élastique (21) reliant mécaniquement la partie de membrane radiale (20) et le piston central (22); le capteur piézoélectrique (S) comprend un boîtier (6), ladite partie de membrane radiale (20) étant supportée de manière plane sur une face d'extrémité radialement intérieure (610) dudit boîtier (6); le piston central (22) supporte le transducteur piézoélectrique (3); et **en ce que** les passages (8) visent directement la partie de membrane radiale (20).

2. Dispositif de protection (V) destiné à être utilisé dans le système (T) selon la revendication 1, **caractérisé en ce que** les passages (8) s'étendent selon un angle ou parallèlement à l'axe longitudinal (AA').

3. Dispositif de protection (V) selon la revendication 1, **caractérisé en ce que** le corps protecteur (9) a un rayon de corps protecteur (R9); et **en ce qu'**un rapport R8/R9 entre le rayon de passage (R8) et le rayon du corps protecteur (R9) est d'au moins 50%, de préférence d'au moins 60%, préférentiellement d'au moins 70%.

4. Dispositif de protection (V) selon l'une quelconque des revendications 1 à 3, **caractérisé en ce que** dans le corps protecteur (9) sont disposés au moins six passages (8) ou au moins huit passages (8) ou au moins douze passages (8); et **en ce que** les passages (8) traversent complètement le corps protecteur (9).

5. Système (T) selon la revendication 1, **caractérisé en ce que** le dispositif de protection (V) est relié au boîtier (6) par une liaison de matière.

6. Système (T) selon l'une quelconque des revendications 1 ou 5, **caractérisé en ce que** la partie de membrane radiale (20) est reliée à la face d'extrémité radialement intérieure (610) du boîtier (6) par une liaison de matière.

7. Système (T) selon l'une quelconque des revendications 1, 5 ou 6, **caractérisé en ce que** des ondes de choc arrivant à la partie radiale de membrane (20) à travers les passages (8) ont une première interaction avec la membrane (2) dans la partie radiale de membrane (20); lors de ladite première interaction, les ondes de choc sont couplées dans la partie de membrane radiale (20); et **en ce que** les ondes de choc couplées se propagent davantage dans le boîtier (6) depuis la partie de membrane radiale (20) via le support plan de la partie de membrane radiale (20) sur la face d'extrémité (610) du boîtier (6).

8. Système (T) selon la revendication 7, **caractérisé en ce que** les ondes de choc se propagent dans le boîtier (6) dans une direction longitudinale (AA') sans étirer mécaniquement la membrane (2) dans une direction radiale.

9. Système (T) selon l'une quelconque des revendications 1, 5 à 8, **caractérisé en ce que** la membrane (2) est montée dans le boîtier (6) via la partie de membrane radiale (20); et **en ce que** le transducteur piézoélectrique (3) et le piston central (22) sont espacés du boîtier (6) par un écart (611).

10. Système (T) selon l'une quelconque des revendications 1, 5 à 9, **caractérisé en ce que** le dispositif de protection (V) et la membrane (2) sont espacés l'un de l'autre par une cavité (5); les passages (8) communiquent avec la cavité (5); des ondes de choc traversant les passages (8) entrent dans un labyrinthe, dans lequel labyrinthe elles interagissent plusieurs fois avec le corps protecteur (9) et la membrane (2); et **en ce que** les ondes de choc ne se couplent dans le piston central (22) qu'après de multiples interactions dans le labyrinthe.

11. Système (T) selon la revendication 10, **caractérisé en ce qu'**une hauteur de la cavité (5) est inférieure à un rayon des passages (8).
